Europäisches Patentamt

European Patent Office

Office européen des brevets

(11) Publication number: **0 172 799**
A2

## (12) EUROPEAN PATENT APPLICATION

(21) Application number: 85870094.1

(22) Date of filing: 01.07.85

(51) Int. Cl.⁴: **B 01 D 46/24**
**B 01 D 39/08**

(30) Priority: 02.07.84 US 627122

(43) Date of publication of application:
26.02.86 Bulletin 86/9

(84) Designated Contracting States:
BE DE FR GB IT

(71) Applicant: Monsanto Company
Patent Department 800 North Lindbergh Boulevard
St. Louis Missouri 63167(US)

(72) Inventor: Kocatas, Babur Mehmet
12 Ridgemoor Drive
Clayton Missouri 63105(US)

(72) Inventor: Tonne, William Robert, Sr.
4 Oak Bluff
St. Peters Missouri 63376(US)

(74) Representative: McLean, Peter et al,
Monsanto Europe S.A. Patent Department Avenue de
Tervuren 270-272 Letter Box No 1
B-1150 Brussels(BE)

(54) Fiber bed element.

(57) A fiber bed element is provided which is formed as an annular bed of fibers. The bed of fibers are formed of layers of predominantly parallel staple fiber slivers having a weight of from approximately 0.1 to approximately 50.0 grams per meter.

FIG. 4.

## FIBER BED ELEMENT

### BACKGROUND OF THE INVENTION

This invention relates to fiber bed elements. More particularly, this invention relates to fiber bed elements which are formed by winding slivers of fibers into an annular shape and to the use of such fiber bed elements to remove aerosols from a gas stream. This invention also relates to the fabrication and use of a fiber bed element which has a uniform packing density throughout the element with the use of a minimum of fiber.

### DESCRIPTION OF THE PRIOR ART

For many years fiber bed mist eliminators were fabricated by packing randomly distributed fibers in the annulus formed by two concentric screens. It was very difficult to obtain a uniform packing density; thus, to compensate for the uneven packing densities, it was necessary to make such elements significantly thicker than if the packing were uniform to prevent gas channeling and lower efficiencies. The addition of fiber to the fiber bed increases manufacturing costs and increases operating costs as a result of the higher pressure drop across the extra fiber.

To increase the uniformity of the packing density, rovings of staple fibers were made. Glass fiber rovings typically have a weight of approximately one hundred grams per meter. The rovings were packed within the annulus formed by a pair of concentric screens as is shown in U.S. Patent 4,244,100. Alternately the roving was wound on the outer surface of a screen and then held in place by the installation of a concentric screen about the outer surface of the wound roving.

It has been found that even this configuration does not provide a completely uniform packing density. Fiber free volumes are formed as channels between the layers of roving as a result of the generally round configuration of the roving. While two generally round sections of roving may be contiguous, they will be in fiber-to-fiber contact along only a small portion of the facing surfaces. The channels are not uniformly distributed throughout the fiber bed; thus, the fiber bed cannot have a completely uniform packing density. While the roving may have supplanted the randomly packed fibers, it is still necessary to use a fiber bed having a greater thickness than would otherwise be necessary to compensate for the channels formed between adjacent segments of the roving.

## SUMMARY OF THE INVENTION

It is an object of this invention to provide a fiber bed element having a more uniform packing density.

It is a further object of this invention to provide a fiber bed element which is formed in annular layers formed of a plurality of predominantly parallel slivers of staple fibers.

It is yet another object of this invention to provide a method of making a fiber bed element by forming layers of a plurality of predominantly parallel slivers of staple fibers.

## DESCRIPTION OF THE DRAWINGS

Figures 1 and 2 show a section of a fiber bed element wound using the roving of the prior art.

Figure 3 shows a section of the slivers.

Figure 4 shows a section of a fiber bed element wound using the plurality of parallel slivers of this invention.

## DESCRIPTION OF THE PREFERRED EMBODIMENTS

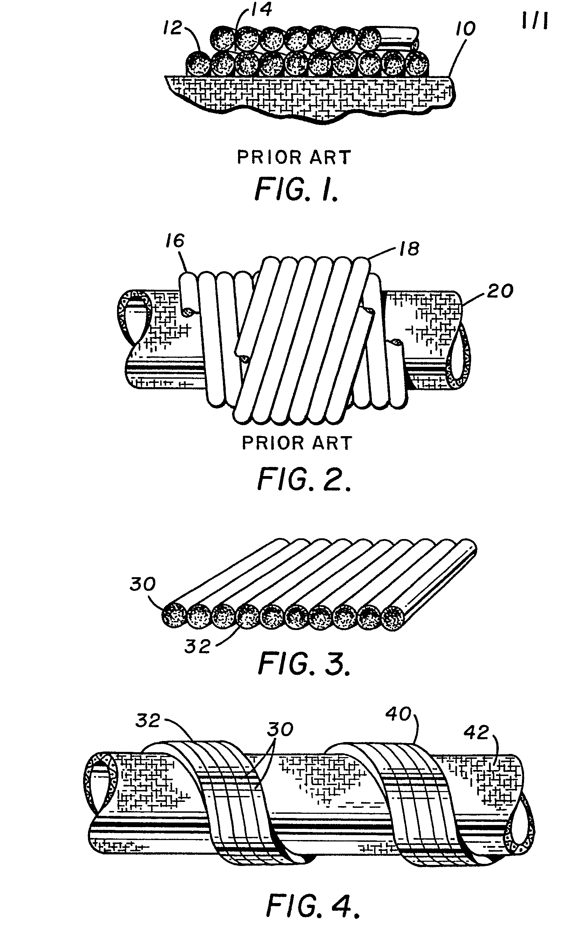

Referring now to Figure 1, a section of a fiber bed element 10 is shown. The fiber bed was wound using the roving 12 of the prior art. The segments of the roving 12 which are shown may be likened to layers of parallel logs with each layer of logs placed at an angle to the prior layer of logs.  It is thus easy to visualize the channels 14 which are formed between adjacent segments of the roving 12 and between the layers of roving 12.  While sufficient layers of roving 12 may be wound to provide an effective fiber bed element 10, the channels 14 represent portions of the fiber bed volume in which no fibers are present. The channels 14 are not randomly distributed throughout the fiber bed, therefore, the fiber bed will not have a perfectly uniform packing density.  When the fiber bed is wound with a glass fiber, the roving will typically weigh approximately one hundred grams per meter of length.

Turning now to Figure 2, a fiber bed element 10 of the prior art is again shown.  Two adjacent layers 16 and 18 of the roving 12 are shown as they typically appear when wound about a cylindrical core or screen 20.

Figure 3 shows a section of the slivers 30. The slivers 30 are positioned adjacent one another in a single plane to form a ribbon 32 for winding a fiber bed element.  The slivers 30 are positioned adjacent to and predominantly parallel one another.  The slivers 30 are twisted during manufacture and, thus, may cross one another; however, they are predominantly parallel and contiguous to prevent the formation of gaps or holes within the ribbon 32 that is formed.

Turning now to Figure 4, a fiber bed element 40 of this invention is shown with one portion of the ribbon of slivers 30 highlighted.  The fiber bed is formed from a plurality of predominantly parallel slivers which have a much smaller diameter than the roving of the prior art shown in Figure 1.  The use of the generally circular shaped slivers 30 cannot totally eliminate the channels 14 formed between adjacent segments of the roving 12; however, the size of the channels is dependent upon the density and packing of the fiber bed.  The smaller diameter of the slivers 30 when compared to the roving 12, allows numerous slivers to be used to fill a volume which was filled before by a single roving. This use of a plurality of slivers 30 divides the open channel between rovings into a plurality of much smaller channels between adjacent slivers. The division of the channels in this fashion reduces the fiber-free volume present at any location within the fiber bed, increases the random distribution of this fiber-free volume throughout the fiber bed and provides a more uniform fiber packing density. This is important because it is the fibers which collect the aerosols when the fiber bed element is placed in use. The slivers are made of staple fibers and weigh, when glass fibers are used, from approximately 0.1 to approximately 50.0 grams per meter of length, thus the roving of the prior art, which typically weighed approximately 100 grams per meter of length, generally had a diameter significantly greater than the diameter of the slivers contemplated for use in this invention.

The slivers may be made of staple fibers of various materials, for example, polymeric materials such as nylons and polyesters, metals such as stainless steel and titanium, ceramic materials and glass. The only requirement is that the fibers not be too stiff and/or brittle to be formed into slivers. The slivers must be self-supporting, must retain their shape and must be sufficiently flexible to be wound into an annular shape to form a fiber bed. If glass is used for making the fibers, the fibers should have a mean diameter of from approximately five to approximately thirty microns, with a preferred mean diameter in the range of approximately five to approximately fifteen microns. With glass fibers of the preferred mean diameter, the sliver will weigh from approximately 0.1 to approximately 50.0 grams per meter of length.

The slivers 30 are made of staple fibers. These are long hair-like fibers that can be wound together. Each sliver is individually twisted during its manufacture; thus, the fibers in a sliver are non-oriented.

The fiber bed element 40 of this invention usually has a core formed by a cylindrical screen 42. A bed of fibers forms an annulus about the cylindrical screen. The bed of fibers is formed by layers of fibers. Each layer of fibers comprises a plurality of predominantly parallel slivers 30 of staple fibers. The thread-like slivers 30 are grouped together, predominantly parallel to one another, to form ribbons 32 which are wound in a spiral about the cylindrical screen core 42 to form the layers of slivers. Each layer of slivers is generally non-parallel to the radially adjacent layers; however, the radially adjacent layers may be parallel to one another without departing from the teachings of this invention. If glass fibers are used, the fibers have a mean diameter of from about approximately 5 to approximately 30 microns and it is preferred that the mean diameter be between approximately 5 and approximately 15 microns, with a sliver weight of from approximately 0.1 to approximately 50.0 grams per meter of sliver length. The fiber beds have a thickness of from approximately 0.6 centimeters to approximately 8 centimeters. A second cylindrical screen, not shown in the figures, may be placed upon the outer surface of the fiber bed to contain the fiber bed and to protect it during handling of the fiber bed element. The second cylindrical screen is concentric with the cylindrical screen which forms the core of the fiber bed elements.

An alternate construction of the fiber bed element provides a bed of fibers as described above without the cylindrical screen core or the second cylindrical screen about the outer surface of the fiber bed. Such a fiber bed element has a cylindrical core around which an annular bed of fibers is formed. Following the winding of the annular bed of fibers, the cylindrical core is removed from the fiber bed. If the fiber bed is wound with the bed density and the tightness of the winding properly chosen, the fiber bed will be self-supporting and the cylindrical screen core may be removed. Similarly the cylindrical screen about the outer surface of the fiber bed may be eliminated.

The fiber bed element of this invention may be fabricated by providing a cylindrical core and winding a plurality of slivers of staple fiber about the cylindrical core to form a bed of fibers having an annular shape. The cylindrical core must be perforated to allow gas flow, however, its actual configuration is relatively unimportant. While the core used in forming the fiber bed elements of this invention has been generally referred to as being cylindrical, such a shape is neither required nor necessary. The terms cylindrical core or cylindrical screen are intended to include other shapes such as triangular and square shapes which also form a hollow figure for the fiber bed element. The cylindrical core may be formed as a cylindrical screen, a perforated metal sheet or anything in between these extremes. The plurality of slivers are grouped together ribbon-like and are spirally wound about the cylindrical core to form layers about the cylindrical core. The slivers are predominantly parallel during the winding and they therefore form a flat ribbon which is wound spiral-like around the cylindrical core. As it is wound, the ribbon of slivers form a helix wherein at each revolution about the core the ribbon of slivers is spaced apart from the next adjacent portion of the ribbon. Each sliver is individually twisted during its manufacture and is again twisted during its unraveling, thus, neither the fibers within a sliver nor the slivers are oriented with one another. During winding about the cylindrical core the slivers may cross one another, but, they remain under sufficient tension to maintain the extensive sliver to sliver contact. Since a few of the slivers may cross one another during the manufacture of the fiber bed, they are considered to be predominantly parallel rather than completely parallel. The plurality of predominantly parallel slivers comprises between approximately 4 and approximately 60 slivers which are used simultaneously. The slivers are wound ribbon-like about the central cylindrical screen or core and form layers of slivers to make a bed of fibers. Each of the layers of slivers is preferably not parallel to the adjacent layers; however, the fiber bed will perform equally efficiently if the adjacent layers of slivers are parallel to one another. A second cylindrical screen may be placed upon the outer surface of the fiber bed.

Fiber bed elements were constructed in accordance with the teachings of this invention. A cylindrical screen was used as the core. The wires of the screen were spaced approximately 3.8 centimeters from one another but other spacing within a range of from about 0.5 centimeters to about 10.0 centimeters could have as easily been used. A perforated metal sheet is even appropriate providing the necessary gas flow rate is maintained. A ribbon of 24 slivers was formed and was spirally wound about the cylindrical screen. The slivers were formed of staple fibers having a fiber diameter of between approximately 7 microns and approximately 11 microns. The sliver weighed approximately 0.77 grams per meter. Layers of slivers were added to the fiber bed until a bed thickness of from about 2.8 centimeters to about 3.8 centimeters was reached. The fiber bed had a bed density of between 0.15 and 0.25 grams per cubic centimeter and a bed voidage of from about 85 to about 99 percent. Other fiber bed elements were made in which a ribbon of 36 slivers, instead of 24, was wound in a spiral about the cylindrical screen. For each fiber bed element, a second cylindrical screen was placed about the outer surface of the annular fiber bed. A number of the fiber bed elements were tested by spraying a color tracer against the upstream side as an appropriate air flow was passing through the fiber bed element. In each case the fiber bed element effectively removed the color tracer from the air stream by preventing the color tracer from passing through the fiber bed and appearing on the downstream side. The color, carried by the air stream, passed toward the center of the fiber bed element and drained vertically downward rather than completing passage horizontally through the fiber bed element.

It is believed that the efficiency of the fiber bed elements of this invention can be explained by considering the individual slivers as individual drain paths or as drain pipes or wicks. For the roving of the prior art, drainage of collected aerosols appears to be at the center of the roving. Thus, a thick roving occupies a relatively large amount of volume within the fiber bed but only provides one path for the drainage of collected aerosols. This path is along the surface of the central fibers within the roving. It is believed that the slivers, which are much smaller than the roving used herefore, act as individual drain paths which enhance intrabed drainage. Each sliver provides a path for the drainage of the collected aerosols.  Thus the much greater number of slivers, when compared to the roving previously used, increases the drainage within the fiber bed in the vertical direction.  The increased ability of the fiber bed element to drain the collected aerosols in the vertical direction reduced the passage of aerosols through the fiber bed and the reentrainment of aerosols from the downstream surface of the fiber bed element.

**0172799**

WE CLAIM:

1.    A fiber bed element comprising:

a bed of fibers forming an annulus, said bed of fibers being formed by a plurality of predominantly parallel slivers of staple fibers having a weight of from approximately 0.1 to approximately 50.0 grams per meter, said plurality of predominantly parallel slivers forming layers within said bed of fibers.

2.    The fiber bed element of Claim 1 further comprising a cylindrical screen wherein said bed of fibers is formed by winding said plurality of predominantly parallel slivers about said cylindrical screen.

3.    The fiber bed element of Claim 2 wherein said plurality of predominantly parallel slivers comprises from about 4 to about 60 predominantly parallel slivers which are simultaneously wound about said cylindrical screen.

4.    The fiber bed element of Claim 1 wherein said staple fibers have a diameter of between about 7 microns and about 11 microns.

5.    The fiber bed layer of Claim 1 wherein each of said layers of slivers is non-parallel to the adjacent layers of said slivers.

6.    A method for removing aerosols from a gas comprising:

providing an annular fiber bed element comprising a plurality of predominantly parallel slivers of staple fibers having a weight of from approximately 0.1 to approximately 50.0 grams per meter, and a diameter of from about 7 microns to about 11 microns, said plurality of predominantly parallel slivers forming layers within said bed of fibers; and

passing said gas through the fiber bed element to collect said aerosols within said fiber bed element.

7.   A fiber bed element comprising:

a cylindrical screen;

a plurality of slivers of staple fiber forming an annular bed of fibers, said staple fibers having a diameter of from about 7 microns to about 11 microns and said slivers having a weight of from about 0.1 to about 50.0 grams per meter of length, said slivers forming layers within said bed of fibers; and

a second cylindrical screen about said bed of fibers.

8.   The fiber bed element of Claim 7 wherein each of said layers of slivers is non-parallel to the adjacent layers of slivers.

9.   A method of forming a fiber bed element comprising:

providing a cylindrical core;

winding a plurality of slivers of staple fiber about said cylindrical core to form an annular bed of fibers, said slivers having a weight of from about 0.1 to about 50.0 grams per meter of length, said slivers forming layers within said bed of fibers; and

removing said cylindrical core from said annular bed of fibers to provide a self-supporting fiber bed element.

PRIOR ART

FIG. 1.

PRIOR ART

FIG. 2.

FIG. 3.

FIG. 4.